# EUROPEAN PATENT SPECIFICATION

(11) **EP 1 093 320 B1**
(45) Date of publication and mention of the grant of the patent: **13.07.2005**
(21) Application number: 99440277.4
(22) Date of filing: 15.10.1999
(51) Int. Cl.: H04Q 11/04

(54) **A communications network for exchanging data packets of ATM connections and methods and network nodes for this communications network**
Ein Kommunikationsnetz zum Austausch von Datenpaketen von ATM Verbindungen sowie Verfahrens und Netzwerkknoten für dieses Kommunikationsnetz
Un réseau de communication pour échanger des paquets de données de connexions "ATM" et procédés et noeuds de réseau pour ce réseau de communication

(43) Date of publication of application: 18.04.2001
(73) Proprietor: ALCATEL, 75008 Paris (FR)
(72) Inventor: Tjoens, Yves, 8200 Sint Michiels-Brugge (BE)
(74) Representative: Brose, Gerhard, Dipl.-Ing.

(56) References cited:
- EP-A- 0 426 599
- EP-A- 0 926 922
- WO-A-99/45740
- U BLACK: "ATM, Volume II Signaling in broadband networks" PRENTICE HALL SERIES IN ADVANCED COMMUNICATIONS TECHNOLOGIES,US,UPPER SADDLE RIVER, NJ: PRENTICE HALL,1998, pages 159-179, XP002080340 ISBN: 0-13-571837-6

## Description

The invention relates to a communications network for exchanging data packets of ATM connections according to the preamble of Claim 1, a method for making available connection data according to the preamble of Claim 2, a method for determining path information according to the preamble of Claim 3, a network node for a lower network level according to the preamble of Claims 4 and 5, and a network node for a higher network level according to the preamble of Claim 6.

A communications network as described in the preamble of Claim 1 is currently associated with the designation PNNI. A frequently found version of this abbreviation is "private network network interface". However, the use of such networks is now in no way limited to private networks. An important application of such networks is in the context of the Internet.

Such a communications network is generally physically identical to a part of the global communications network via which for example telephone calls are also conducted; however it may be logically distinct therefrom.

In such a communications network, data are transferred in the form of packets, a packet head of each data packet containing an item of path information with the aid of which it is routed through the communications network. This path information is acquired in a source network node from the destination information relating to a destination network node. The source network node is the network node at which the particular data packet enters this communications network, while the destination network node is the network node at which the particular data packet exits from the communications network. The path information must clearly define a path so that data packets with the same path information must also take the same path. However, the path information need not necessarily contain, in each sub-section of the path, all the detailed information for the entire path, but can be redefined en route for the particular next larger section.

In order always to be able to define the path information for the entire path actually in the source network node, every network node which can constitute a source network node must be able to access the connection data for the whole of the communications network. In known communications networks of this kind, this occurs in that each network node of the lowest network level contains a data bank in which connection data for the whole of the communications network are stored. An example of such communications network can be found in for example EP-A-0 926 922. The larger such a communications network becomes, the larger each individual data bank must be; the maintenance of the data is also problematic.

The object of the invention is to design the communications network so as to reduce the outlay therein for making available connection data and for determining path information. It is a further object of the invention to provide methods and network nodes for this purpose.

This object is achieved in accordance with the invention by a communications network according to the teaching of Claim 1, a method for making available connection data according to the teaching of Claim 2, a method for determining path information according to the teaching of Claim 3, a network node for a lower network level according to the teaching of Claim 4 and according to the teaching of Claim 5, and a network node for a higher network level according to the teaching of Claim 6.

Thus, in accordance with the invention, the connection data for determining path information in such a communications network are stored decentrally such as to differentiate between connection data for a closer environment and those for a wider environment. Here the connection data for a closer environment each are stored in all the data banks, while the connection data for a wider environment are stored only in individual data banks.

Further developments of the invention are disclosed in the sub-claims and in the following description.

In the following the invention will be explained further making reference to the attached drawings wherein:
Figure 1 illustrates an example for a communications network according to the invention and
Figure 2 illustrates an example for a network node according to the invention.

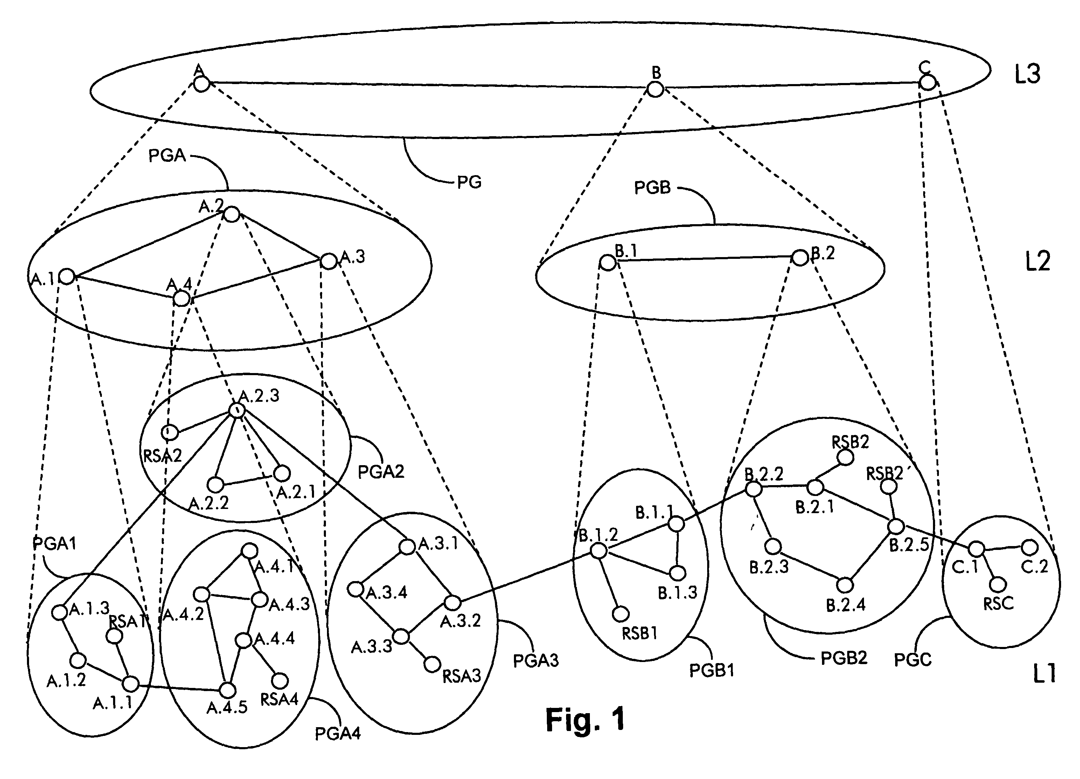

The starting point will firstly be described with reference to Figure 1:

A plurality of network nodes A.1.1, ..., C.2 are arranged in a network level L1. These network nodes are combined to form groups PGA1, ..., PGC (known as peer groups). The network nodes are connected to one another by physical connections such that individual pairs of network nodes, for example A.1.1 and A.1.2 or A.1.1 and A.4.5, are directly connected to one another while other pairs of network nodes are interconnectible only via the intermediary of at least one further network node. At least in this indirect manner, every network node can be connected to every other network node. In part, alternative paths are also possible. In Figure 1 these connections have been represented by continuous lines; for reasons of clarity however, they have not been provided with reference symbols.

A higher network level L2 comprises further network nodes A.1, ..., B.2 which each are administratively responsible for one of the lower groups. These network nodes are again combined to form groups PGA and PGB. Above this level is arranged a third network level L3 comprising further network nodes A, B and C. These are combined in a group PG. Broken lines represent the regions of responsibility of network nodes in higher network levels for network nodes in lower network levels.

The division of the network nodes, or conversely the combining of the network nodes, to form groups takes place in accordance with principles which are of no further significance here. Therefore it can readily occur that the network node C of the uppermost network level L3 is responsible only for two network nodes C.1 and C.2 in the lowest network level L1 without the presence of an intervening network node or entire group of network nodes in the network level L2.

Although not shown here, a network node of a higher network level must of course be able to establish contact at least with those network nodes in lower network levels for which it is administratively responsible. For this purpose it is physically connected to at least one network node of that group for which it is responsible and is logically connected to every other network node within this group. In the example, the network node A.1 will thus be assumed to be physically connected to the network node A.1.1 and logically connected to the network nodes A.1.2 and A.1.3, and for example the network node A will be assumed to be physically connected to the network node A.1 and logically connected to the network nodes A.2, A.3 and A.4. Furthermore, every network node of a higher network level is to be logically connected to every other network node (A.2, A.3, A.4) of the group (PGA) to which it itself belongs. Thus in the example the network node A.1 is connected to the network nodes A.2, A.3 and A.4 and the network node A is connected to the network nodes B and C. The connections within the network level are again shown by continuous lines but bear no references.

A logic connection between two network nodes consists of a plurality of physical connections interconnected via the intermediary of an intervening network node in a switched mode each. This is generally effected by means of permanent virtual paths.

In general a network node of a higher network level is also at least physically connected to that network node of a lower network level with which it has a physical connection. Normally the connection extends further, for example in that data banks or servicing and maintenance devices are jointly employed or are physically identical and at best are working logically separated.

It should also be noted that, in contrast to other hierarchically constructed networks, only the lower network level is used for the actual physical data exchange; the higher network levels serve exclusively for the administration of the network and may carry signalling information, here especially connection data.

In order now to be able to establish connections between network nodes, and in particular to establish connections between end subscribers connected to the networks nodes, those network nodes from which such connections can emanate must also be able to access the required connection data. For this purpose, in the prior art a data bank in which the connection data for the entire communications network are kept available is provided in each of these network nodes, i.e. in all the network nodes of the lowest network level. The respective superordinate network nodes are responsible for the maintenance of these connection data.

However, in the approach according to the prior art, in large networks very large quantities of data must be stored and also continuously maintained.

In accordance with the invention, not all the data are stored everywhere, and in fact only the connection data for a closer environment are stored in each data bank assigned to a network node of the lowest network level. Then, however, in each such closer environment an additional data bank must be provided which contains connection data leading out of this closer environment into a wider environment.

In the example, the group in question is defined as the closer environment.

Therefore an additional data bank RSA1, ..., RSC is provided within each group PGA1,..., PGC of the lowest network level L1. Each of this additional data banks is assigned to a network node.

The network nodes A.4.1, A.4.2, A.4.3, A.4.4 and A.4.5 are combined for example in the group PGA4. These each comprise a data bank containing the connection data for all possible connections between these five network nodes. Each of these data banks also contains the information that further connection data can be called up in a data bank RSA4 associated with the network node A.4.4.

The data bank RSA4, which can form a unit with the data bank of the network node A.4.4, contains all the other connection data for the entire communications network.

If, for example, a connection is to be established from the network node A.4.2, this node firstly checks whether the destination is situated within the group PGA4 or not. If so, this network node calls up the corresponding connection data from its own data bank and thus establishes the connection. The connection establishment takes place through the exchange of signalling data, generally via connections already constructed as signalling channels. When a connection is established (this also applies to signalling channels), the data exchange takes place via this connection such that the data to be exchanged are packaged together with path information in data packets and thus dispatched. The path information contains stage destinations which are contacted en route and at which the data packets can be routed on to the next stage. This path information is the same for all the data packets of a connection (excepting reactions to faults or the like) and upon the establishment of the connection is determined from the connection data following confirmation by the respective opposite terminals.

The terms "connection data" and "path information" will now be briefly defined in terms of how they are to be understood in this context (independently of a possible different definition of these terms): All data descriptive of the communications network and its characteristics, independently of a concrete individual application, are referred to as "connection data". This comprises in particular data relating to the existence of lines in the widest sense and their capacity. "Path information" refers to the data required to facilitate the switching of the data packets of a concrete ATM connection (also of a signalling connection) from a source network node to a destination network node.

If, in the example commenced in the foregoing, the destination is situated outside the group PGA4, the network node A.4.2 calls up from its own data bank the information that further connection data can be called up via the network node A.4.4 from the data bank RSA4, and through the exchange of signalling data calls up the required further connection data in order thus to establish the required connection. The process of calling up further connection data from the data bank RSA4 takes place so frequently that it may be only insubstantially more complex than the calling up of connection data from the data bank belonging to the network node A.4.2.

For practical considerations, this rigid scheme is often deviated from. Thus, in its own data bank, each network node will also additionally store and call up connection data for those connections which are frequently required. For example the network node A.4.5 will not need to call up the data bank RSA4 via the network node A.4.4 to discover that it itself has a direct connection to the network node A.1.1. Permanent virtual paths are also preferably preset for frequently required connections so that no detailed connection data are needed for this purpose. Such permanent virtual paths can be entered in the data banks like actually physically existing paths.

As the path information for concrete ATM connections need not necessarily initially designate all the network nodes via which the particular ATM connection proceeds, detailed information being required only in the course of the path, it is also sufficient for the connection data to be known only to this extent at the start of the path. For example, for a connection from the network node A.4.3 to the network node C.2 it is sufficient to be able to determine, in the network node A.4.3, that the connection within the group PGA4 must pass through the network nodes A.4.2 and A.4.5, from where it proceeds across the groups PGA1, PGA2 and PGA3 into the region of the group PGB and on into the region of the group PGC. At the boundary to the particular next group it is then always necessary to determine the ongoing path. Each group is of course represented by the corresponding network node. The connection from the network node A.4.3 to the network node C.2 is thus characterised by the information that it is necessary to pass in turn through the regions of the network nodes A.4.2, A.4.5, A.1, A.2, A.3, B and C with the destination C.2. The information must then be redefined within the individual regions.

The idea of differentiating between closer and wider environments can also be expressed hierarchically. Thus the region of the group PGA can be considered as the closer region for the additional data banks RSA1, RSA2, RSA3 and RSA4, and the region of the group PGB can be considered as closer region for the additional data banks RSB1 and RSB2. In each of these groups it is again necessary to provide an additional data bank containing connection data relating to a wider environment for this group, preferably the entire communications network. In very large networks, further hierarchical levels can also be set up for the additional data banks. The drawing does not illustrate such further hierarchical levels or additional data banks in higher hierarchical levels.

As the network nodes of the higher network levels ultimately coincide with network nodes of the lower network level, the additional data banks of the higher network levels are also preferably linked with additional data banks of the lower network level. For example, the data banks RSA3 can contain connection data for the region of the group PGA as additional data bank for the group PGA3 and can contain connection data for the entire communications network as additional data bank for the group PGA. Similar can also apply to the additional data bank RSB2.

In the example of this last mentioned data bank RSB2, the protection of the data can also briefly be discussed. In subordinate network nodes, by way of data protection in some cases it can suffice merely to create back-up copies which are manually retrieved in the event of a fault. Mere duplication of the data in the particular adjacent network node results in simplified handling; protection by means of a data bank serving exclusively for back-up can constitute a further measure, as in the case of the example in which the additional data bank RSB2' of the network node B.2.5 is shown as duplicate of the additional data bank RSB2 of the network node B.2.1. The mutual back-up of two data banks, for example the additional data banks RSA3 and RSA4, achieves the same objective however.

It can easily be seen that when the connection data are hierarchically distributed, their maintenance can also take place in a hierarchical structure. Thus each network node is responsible for providing that it itself, and possibly all the network nodes for which it is responsible, receive(s) all the connection data to be modified, and store(s) these data in the respective data bank. Naturally only the modified connection data which is actually to be stored in the respective data bank need be stored in modified form.

Here it is immaterial whether the modifications are forwarded from the location at which the modification takes place or whether interrogations relating to modifications are made periodically in accordance with a rule of some kind.

As each network node is anyhow automatically computer-controlled and comprises means of communicating with the other network nodes, the means suitable and required for the implementation of this data maintenance consist merely of the program parts required for the control.

The means (program parts) for the implementation of the data maintenance, as well as the means (program parts) by which these (connection) data are called up or output upon request, generally comprise not only simple control steps but also steps for addressing, identification and data protection.

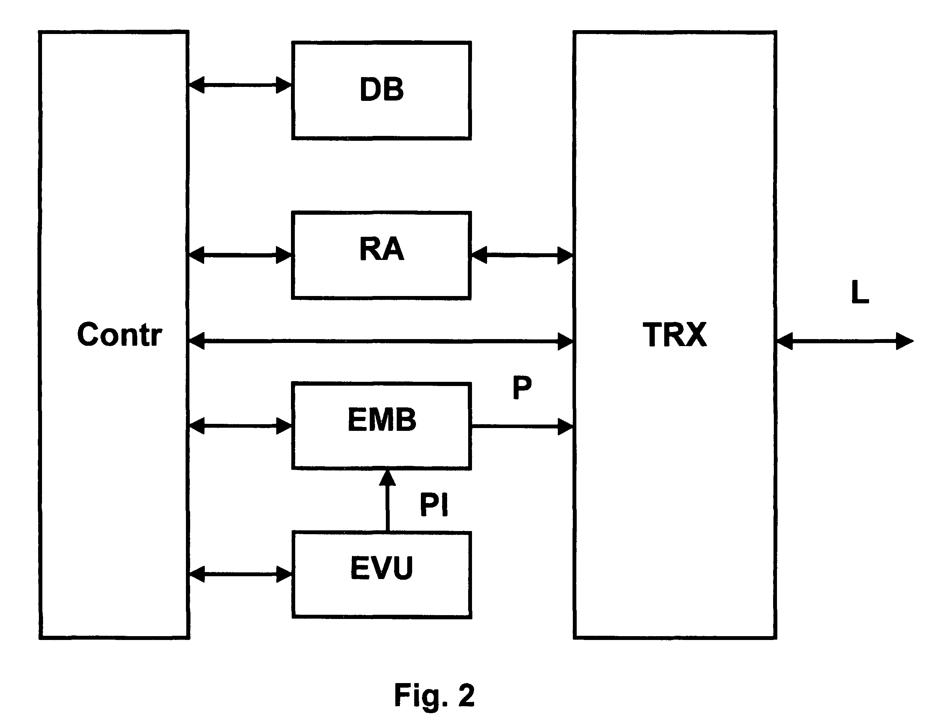

Merely by way of an example, a possible simple construction of a network node according to the invention will be described with reference to Figure 2. Such a network node comprises a control unit Contr, a data bank DB, an interrogation and response unit RA, an embedding unit EMB, an evaluating unit EVU and a transmitting and receiving unit TRX. The network node is connected to the rest of the communications network via at least one data connection L.

The control unit Contr controls all the other units of the network node including the data bank and for this purpose can exchange data and commands bidirectionally with all the units.

The data bank DB contains i.a. all the connection data for the region for which this network node is responsible. Depending upon the task in question, this can comprise only a closer environment, only a wider environment, or both.

The interrogation and response unit RA calls up connection data from other network nodes or responds to interrogations from other network nodes. The data maintenance also takes place via this unit.

The embedding unit EMB links data to be transmitted with an item of path information PI to form a data packet P.

The evaluating unit EVU evaluates connection data from received or stored information and from this makes available the path information for the individual data packets P.

The transmitting and receiving unit TRX forms the interface to the rest of the communications network.

The basic construction of a network node is ultimately the same in all the described situations; only the functions and data stored in the data bank differ.

The measures according to the invention thus facilitate an efficient operation both of smaller, and also in particular larger, communications networks of the described type.

## Claims

1. A communications network for exchanging data packets (P) of ATM connections, which is hierarchically constructed such that in a lowest network level (L1) a plurality of network nodes (A.1.1., ..., C.2) are provided and each are directly or indirectly connected by at least one possible physical path on the one hand to terminal devices and on the other hand to every other network node of this network level, that in higher network levels (L2, L3) network nodes (A.1, ..., A.4, ..., B.2; A, B, C) are provided which each are administratively responsible for a group (PGA1, ..., PGA4, ..., PGB2, PGA, PGB, PGC) of network nodes situated in an underlying network level, and that each network node (e.g. A.1) situated in a higher network level is physically connected to at least one network node (A.1.1) of the group for which it is responsible and is logically connected to every other network node (A.1.2, A.1.3) of this group (PGA1) and to every other network node (A.2, A.3, A.4) of the group to which it itself belongs, in which communications network each network node (e.g. A.1) of a higher network level is responsible for providing that each network node (A.1.1, A.1.2, A.1.3) of a lower network level for which it is responsible can when necessary use the connection data which it requires to determine the path information for the data packets of a concrete ATM connection in this communications network, and in which communications network a data bank (DB), in which connection data are kept available, is arranged in network nodes of a lower network level, **characterised in that** each data bank in a network node of a lower network level (L1) keeps available connection data for a closer environment (PGA1, ..., PGA4, ..., PGC), that at least one additional data bank (RSA1, ..., RSC), which keeps available connection data for a wider environment, is provided and assigned to a network node, and that network node of a higher network level (e.g. A.1) which is responsible for a network node (A.1.1) to which an additional data bank (RSA1) is assigned, also comprises means (Contr, RA) for maintaining the connection data in this additional data bank.

2. A method for making available connection data for determining path information (PI) for the data packets (P) of ATM connections in a communications network which is hierarchically constructed such that in a lowest network level (L1) a plurality of network nodes (A.1.1, ..., C.2) are provided and each are directly or indirectly connected by at least one possible physical path, on the one hand to terminal devices and on the other hand to every other network node of this network level, that in higher network levels (L2, L3) network nodes (A.1, ..., A.4, ..., B.2; A, B, C) are provided which each are administratively responsible for a group (PGA1, ..., PGA4, ..., PGB2, PGA, PGB, PGC) of network nodes situated in an underlying network level, and that each network node (e.g. A.1) situated in a higher network level is physically connected to at least one network node (A.1.1) of the group for which it is responsible and is logically connected to every other network node (A.1.2, A.1.3) of this group (PGA1) and to every other network node (A.2, A.3, A.4) of the group (PGA) to which it itself belongs, in which method each network node (e.g. A.1) of a higher network level is responsible for providing that each network node (A.1.1, A.1.2, A.1.3) of a lower network level for which it is responsible can when necessary use the connection data which it requires to determine the path information (PI) for the data packets (P) of a concrete ATM connection in this communications network, and in which method in network nodes of a lower network level connection data are kept available in a data bank (DB), **characterised in that** each data bank (DB) in a network node of a lower network level keeps available connection data for a closer environment, that at least one additional data bank (RSA1, ..., RSC), which keeps available connection data for a wider environment, is accessible to and assigned to a network node, and that network node of a higher network level (A.1) which is responsible for a network node (A.1.1) to which an additional data bank (RSA1) is assigned, is also responsible for maintaining the connection data in this additional data bank.

3. A method for determining path information (PI) for the data packets (P) of ATM connections in a network node (e.g. A.1.2) of a communications network which is hierarchically constructed such that in a lowest network level (L1) a plurality of network nodes (A.1.1, ..., C.2) are provided and each are directly or indirectly connected by at least one possible physical path, on the one hand to terminal devices and on the other hand to every other network node of this network level, that in higher network levels (L2, L3) network nodes (A.1, ..., A.4, .., B.2; A, B, C) are provided which each are administratively responsible for a group (PGA1, ..., PGA4, ...., PGB2, PGA, PGB, PGC) of network nodes situated in an underlying network level, and that each network node (e.g. A.1) situated in a higher network level is physically connected to at least one network node (A.1.1) of the group for which it is responsible and is logically connected to every other network node (A.1.2, A.1.3) of this group (PGA1) and to every other network node (A.2, A.3, A.4) of the group (PGA) to which it itself belongs, in which method, from this network node belonging to a lower network level, connection data are called up from a data bank (DB) assigned to the network node, **characterised in that** the connection data which cannot be called up from the data bank (DB) assigned to the network node (A.1.2) are called up from an additional data bank (RSA1) which is assigned to another network node (A.1.1).

4. A Network node (A.1.2, ..., C.2) for a lower network level (L1) of a communications network which is hierarchically constructed such that in a lowest network level (L1) a plurality of network nodes (A.1.1, ..., C.2) are provided and each are directly or indirectly connected by at least one possible physical path, on the one hand to terminal devices and on other hand to every other network node of this network level, that in higher network levels (L2, L3) network nodes (A.1, ..., A.4, ..., B.2; A, B, C) are provided which each are administratively responsible for a group (PGA1, ..., PGA4, ..., PGB2, PGA, PGB, PGC) of network nodes situated in an underlying network level, and that each network node (e.g. A.1) situated in a higher network level is physically connected to at least one network node (A.1.1) of the group for which it is responsible and is logically connected to every other network node (A.1.2, A.1.3) of this group (PGA1) and to every other network node (A.2, A.3, A.4) of the group (PGA) to which it itself belongs, in which network node a data bank (DB) is provided in which connection data are kept available, **characterised in that** the data bank (DB) keeps available connection data for a closer environment and that the network node comprises interrogation means (RA) by which the connection data for a wider environment can be called up from an additional data bank (RSA1, ..., RSC) which is assigned to another network node.

5. A network node (A.1.1, ..., C.1) for a lower network level (L1) of a communications network which is hierarchically constructed such that in a lowest network level (L1) a plurality of network nodes (A.1.1, ..., C.2) are provided and each are directly or indirectly connected by at least one possible physical path, on the one hand to terminal devices and on the other hand to every other network node of this network level, that in higher network levels (L2, L3) network nodes (A.1, ..., A.4, ..., B.2; A, B, C) are provided which each are administratively responsible for a group (PGA1, ..., PGA4, ..., PGB2, PGA, PGB, PGC) of network nodes situated in an underlying network level, and that each network node (e.g. A.1) situated in a higher network level is physically connected to at least one network node (A.1.1) of the group for which it is responsible and is logically connected to every other network node (A.1.2, A.1.3) of this group (PGA1) and to every other network node (A.2, A.3, A.4) of the group (PGA) to which it itself belongs, in which network node a data bank (DB) is provided in which connection data are kept available, **characterised in that** an additional data bank (RSA1, ..., RSC), which keeps available connection data for a wider environment, is provided and is assigned to this network node or connected to the data bank (DB) provided in this network node, and that the network node comprises means (RA) whereby connection data from the additional data bank can be emitted to other network nodes upon request.

6. A Network node (A.1, ..., B.2; A, B, C) for a higher network level (L2, L3) of a communications network which is hierarchically constructed such that in a lowest network level (L1) a plurality of network nodes (A.1.1, ..., C.2) are provided and each are directly or indirectly connected by at least one possible physical path, on the one hand to terminal devices and on the other hand to every other network node of this network level, that in higher network levels (L2, L3) network nodes (A.1, ..., A.4, ..., B.2; A, B, C) are provided which each are administratively responsible for a group (PGA1, ..., PGA4, ..., PGB2, PGA, PGB, PGC) of network nodes situated in an underlying network level, and that each network node (e.g. A.1) situated in a higher network level is physically connected to at least one network node (A.1.1) of the group for which it is responsible and is logically connected to every other network node (A.1.2, A.1.3) of this group (PGA1) and to every other network node (A.2, A.3, A.4) of the group (PGA) to which it itself belongs, **characterised in that** the network node comprises means (Contr, RA) for supporting the exchange of connection data between data banks (DB) in network nodes for which this network node is responsible and data banks (DB) in other network nodes for maintaining the respective stored data.

7. A communications network according to Claim 1, **characterised in that** the lower network level whose network nodes each are provided with a data bank in which connection data for a closer environment are kept available is the lowest network level (L1).

8. A communications network according to Claim 7, **characterised in that** the closer environment is the region of that group (e.g. PGA1) to which the respective network node (A.1.1, ..., A.1.3) belongs.

9. A communications network according to Claim 8, **characterised in that** at least one additional data bank (RSA1, ..., RSC) is provided in each group of the lowest network level (L1).

## Patentansprüche

1. Kommunikationsnetz für den Austausch von Datenpaketen (P) von ATM-Verbindungen, das derart hierarchisch aufgebaut ist, dass in einer untersten Netzebene (L1) eine Vielzahl von Netzknoten (A.1.1, ..., C.2) vorhanden und jeweils einerseits mit Endeinrichtungen und andererseits mit jedem anderen Netzknoten dieser Netzebene direkt oder indirekt auf mindestens einem möglichen physikalischen Weg verbunden ist, dass in höheren Netzebenen (L2, L3) Netzknoten (A.1, ..., A.4, ..., B.2; A, B, C) vorhanden sind, die für jeweils eine Gruppe (PGA1, ..., PGA4, ..., PGB2, PGA, PGB, PGC) von in einer darunter liegenden Netzebene gelegenen Netzknoten administrativ zuständig sind und dass jeder in einer höheren Netzebene liegende Netzknoten (z.B. A.1) physikalisch mit mindestens einem Netzknoten (A.1.1) derjenigen Gruppe, für die er zuständig ist, und logisch mit jedem anderen Netzknoten (A.1.2, A.1.3) dieser Gruppe (PGA1) und mit jedem anderen Netzknoten (A.2, A.3, A.4) derjenigen Gruppe (PGA) verbunden ist, der er selbst angehört, in welchem Kommunikationsnetz jeder Netzknoten (z.B. A.1) einer höheren Netzebene dafür verantwortlich ist, dass jeder Netzknoten (A.1.1, A.1.2, A.1.3) einer niedrigeren Netzebene, für den er zuständig ist, bei Bedarf diejenigen verbindungsdaten verwenden kann, die er für das Ermitteln der Wegeinformationen für die Datenpakete einer konkreten ATM-Verbindung in diesem Kommunikationsnetz benötigt, und in welchem Kommunikationsnetz in Netzknoten einer niedrigeren Netzebene eine Datenbank (DB) vorhanden ist, in der Verbindungsdaten bereitgehalten werden, **da** **durch gekennzeichnet, dass** jede Datenbank in einem Netzknoten einer niedrigeren Netzebene (L1) Verbindungsdaten für eine engere Umgebung (PGA1, ..., PGA4, ..., PGC) bereithält, dass mindestens eine zusätzliche Datenbank (RSA1, ..., RSC) vorhanden und einem Netzknoten zugeordnet ist, die Verbindungsdaten für eine weitere Umgebung bereithält, und dass derjenige Netzknoten einer höheren Netzebene (z.B. A.1), der für einen Netzknoten (A.1.1) zuständig ist, welchem eine zusätzliche Datenbank (RSA1) zugeordnet ist, auch Mittel (Contr, RA) enthält, um die Pflege der Verbindungsdaten in dieser zusätzlichen Datenbank durchzuführen.

2. Verfahren zum Bereitstellen von Verbindungsdaten zum Ermitteln von Wegeinformationen (PI) für die Datenpakete (P) von ATM-Verbindungen in einem Kommunikationsnetz, das derart hierarchisch aufgebaut ist, dass in einer untersten Netzebene (L1) eine Vielzahl von Netzknoten (A.1.1, ..., C.2) vorhanden und jeweils einerseits mit Endeinrichtungen und andererseits mit jedem anderen Netzknoten dieser Netzebene direkt oder indirekt auf mindestens einem möglichen physikalischen Weg verbunden ist, dass in höheren Netzebenen (L2, L3) Netzknoten (A.1, ..., A.4, ..., B.2; A, B, C) vorhanden sind, die für jeweils eine Gruppe (PGA1, ..., PGA4, ..., PGB2, PGA, PGB, PGC) von in einer darunter liegenden Netzebene gelegenen Netzknoten administrativ zuständig sind, und dass jeder in einer höheren Netzebene liegende Netzknoten (z.B. A.1) physikalisch mit mindestens einem Netzknoten (A.1.1) derjenigen Gruppe, für die er zuständig ist, und logisch mit jedem anderen Netzknoten (A.1.2, A.1.3) dieser Gruppe (PGA1) und mit jedem anderen Netzknoten (A.2, A.3, A.4) derjenigen Gruppe (PGA) verbunden ist, der er selbst angehört, bei welchem Verfahren jeder Netzknoten (z.B. A.1) einer höheren Netzebene dafür verantwortlich ist, dass jeder Netzknoten (A.1.1, A.1.2, A.1.3) einer niedrigeren Netzebene, für den er zuständig ist, bei Bedarf diejenigen Verbindungsdaten verwenden kann, die er für das Ermitteln der Wegeinformationen (PI) für die Datenpakete (P) einer konkreten ATM-Verbindung in diesem Kommunikationsnetz benötigt, und bei welchem Verfahren in Netzknoten einer niedrigeren Netzebene Verbindungsdaten in einer Datenbank (DB) bereitgehalten werden, **dadurch gekennzeichnet, dass** jede Datenbank (DB) in einem Netzknoten einer niedrigeren Netzebene Verbindungsdaten für eine engere Umgebung bereithält, dass mindestens eine zusätzliche Datenbank (RSA1, ..., RSC), die Verbindungsdaten für eine weitere Umgebung bereithält, einem Netzknoten zugänglich und diesem zugeordnet ist, und dass derjenige Netzknoten einer höheren Netzebene (A.1), der für einen Netzknoten (A.1.1) zuständig ist, welchem eine zusätzliche Datenbank (RSA1) zugeordnet ist, auch für die Pflege der Verbindungsdaten in dieser zusätzlichen Datenbank zuständig ist.

3. Verfahren zum Ermitteln von Wegeinformationen (PI) für die Datenpakete (P) von ATM-Verbindungen in einem Netzknoten (z.B. A.1.2) eines Kommunikationsnetzes, das derart hierarchisch aufgebaut ist, dass in einer untersten Netzebene (L1) eine Vielzahl von Netzknoten (A.1.1, ..., C.2) vorhanden und jeweils einerseits mit Endeinrichtungen und andererseits mit jedem anderen Netzknoten dieser Netzebene direkt oder indirekt auf mindestens einem möglichen physikalischen Weg verbunden ist, dass in höheren Netzebenen (L2, L3) Netzknoten (A.1, ..., A.4, ..., B.2; A, B, C) vorhanden sind, die für jeweils eine Gruppe (PGA1, ..., PGA4, ..., PGB2, PGA, PGB, PGC) von in einer darunter liegenden Netzebene gelegenen Netzknoten administrativ zuständig sind, und dass jeder in einer höheren Netzebene liegende Netzknoten (z.B. A.1) physikalisch mit mindestens einem Netzknoten (A.1.1) derjenigen Gruppe, für die er zuständig ist, und logisch mit jedem anderen Netzknoten (A.1.2, A.1.3) dieser Gruppe (PGA1) und mit jedem anderen Netzknoten (A.2, A.3, A.4) derjenigen Gruppe (PGA) verbunden ist, der er selbst angehört, bei welchem Verfahren von diesem Netzknoten, der einer niedrigeren Netzebene angehört, Verbindungsdaten aus einer dem Netzknoten zugeordneten Datenbank (DB) abgerufen werden, **dadurch gekennzeichnet, dass** solche Verbindungsdaten, die nicht aus der dem Netzknoten (A.1.2) zugeordneten Datenbank (DB) abgerufen werden können, aus einer zusätzlichen Datenbank (RSA1) abgerufen werden, die einem anderen Netzknoten (A.1.1) zugeordnet ist.

4. Netzknoten (A.1.2, ..., C.2) für eine niedrigere Netzebene (L1) eines Kommunikationsnetzes, das derart hierarchisch aufgebaut ist, dass in einer untersten Netzebene (L1) eine Vielzahl von Netzknoten (A.1.1, ..., C.2) vorhanden und jeweils einerseits mit Endeinrichtungen und andererseits mit jedem anderen Netzknoten dieser Netzebene direkt oder indirekt auf mindestens einem möglichen physikalischen Weg verbunden ist, dass in höheren Netzebenen (L2, L3) Netzknoten (A.1, ..., A.4, ..., B.2; A, B, C) vorhanden sind, die für jeweils eine Gruppe (PGA1, ..., PGA4, ..., PGB2, PGA, PGB, PGC) von in einer darunter liegenden Netzebene gelegenen Netzknoten administrativ zuständig sind, und dass jeder in einer höheren Netzebene liegende Netzknoten (z.B. A.1) physikalisch mit mindestens einem Netzknoten (A.1.1) derjenigen Gruppe, für die er zuständig ist, und logisch mit jedem anderen Netzknoten (A.1.2, A.1.3) dieser Gruppe (PGA1) und mit jedem anderen Netzknoten (A.2, A.3, A.4) derjenigen Gruppe (PGA) verbunden ist, der er selbst angehört, in welchem Netzknoten eine Datenbank (DB) vorhanden ist, in der Verbindungsdaten bereitgehalten werden, **dadurch gekennzeichnet, dass** die Datenbank (DB) Verbindungsdaten für eine engere Umgebung bereithält und dass der Netzknoten Abfragemittel (RA) aufweist, mittels derer aus einer zusätzlichen Datenbank (RSA1, ..., RSC), die einem anderen Netzknoten zugeordnet ist, die Verbindungsdaten für eine weitere Umgebung abrufbar sind.

5. Netzknoten (A.1.1, ..., C.1) für eine niedrigere Netzebene (L1) eines Kommunikationsnetzes, das derart hierarchisch aufgebaut ist, dass in einer untersten Netzebene (L1) eine Vielzahl von Netzknoten (A.1.1, ..., C.2) vorhanden und jeweils einerseits mit Endeinrichtungen und andererseits mit jedem anderen Netzknoten dieser Netzebene direkt oder indirekt auf mindestens einem möglichen physikalischen Weg verbunden ist, dass in höheren Netzebenen (L2, L3) Netzknoten (A.1, ..., A.4, ..., B.2; A, B, C) vorhanden sind, die für jeweils eine Gruppe (PGA1, ..., PGA4, ..., PGB2, PGA, PGB, PGC) von in einer darunter liegenden Netzebene gelegenen Netzknoten administrativ zuständig sind, und dass jeder in einer höheren Netzebene liegende Netzknoten (z.B. A.1) physikalisch mit mindestens einem Netzknoten (A.1.1) derjenigen Gruppe, für die er zuständig ist, und logisch mit jedem anderen Netzknoten (A.1.2, A.1.3) dieser Gruppe (PGA1) und mit jedem anderen Netzknoten (A.2, A.3, A.4) derjenigen Gruppe (PGA) verbunden ist, der er selbst angehört, in welchem Netzknoten eine Datenbank (DB) vorhanden ist, in der Verbindungsdaten bereitgehalten werden, **dadurch gekennzeichnet, dass** eine zusätzliche Datenbank (RSA1, ..., RSC), die Verbindungsdaten für eine weitere Umgebung bereithält, vorhanden und diesem Netzknoten zugeordnet oder mit der in diesem Netzknoten vorhandenen Datenbank (DB) verbunden ist und dass der Netzknoten Mittel (RA) aufweist, um an andere Netzknoten Verbindungsdaten aus der zusätzlichen Datenbank auf Abruf abzugeben.

6. Netzknoten (A.1, ..., B.2; A, B, C) für eine höhere Netzebene (L2, L3) eines Kommunikationsnetzes, das derart hierarchisch aufgebaut ist, dass in einer untersten Netzebene (L1) eine Vielzahl von Netzknoten (A.1.1, ..., C.2) vorhanden und jeweils einerseits mit Endeinrichtungen und andererseits mit jedem anderen Netzknoten dieser Netzebene direkt oder indirekt auf mindestens einem möglichen physikalischen Weg verbunden ist, dass in höheren Netzebenen (L2, L3) Netzknoten (A.1, ..., A.4, ..., B.2; A, B, C) vorhanden sind, die für jeweils eine Gruppe (PGA1, ..., PGA4, ..., PGB2, PGA, PGB, PGC) von in einer darunter liegenden Netzebene gelegenen Netzknoten administrativ zuständig sind, und dass jeder in einer höheren Netzebene liegende Netzknoten (z.B. A.1) physikalisch mit mindestens einem Netzknoten (A.1.1) derjenigen Gruppe, für die er zuständig ist, und logisch mit jedem anderen Netzknoten (A.1.2, A.1.3) dieser Gruppe (PGA1) und mit jedem anderen Netzknoten (A.2, A.3, A.4) derjenigen Gruppe (PGA) verbunden ist, der er selbst angehört, **dadurch gekennzeichnet, dass** der Netzknoten Mittel (Contr, RA) aufweist, um den Austausch von Verbindungsdaten zwischen Datenbanken (DB) in Netzknoten, für die dieser Netzknoten zuständig ist, und Datenbanken (DB) in anderen Netzknoten zur Pflege der jeweiligen Datenbestände zu unterstützen.

7. Kommunikationsnetz nach Anspruch 1, **dadurch gekennzeichnet, dass** die niedrigere Netzebene, in deren Netzknoten jeweils eine Datenbank vorhanden ist, in der Verbindungsdaten für eine engere Umgebung bereitgehalten werden, die unterste Netzebene (L1) ist.

8. Kommunikationsnetz nach Anspruch 7, **dadurch gekennzeichnet, dass** die engere Umgebung der Bereich derjenigen Gruppe (z.B. PGA1) ist, welcher der jeweilige Netzknoten (A.1.1, ..., A.1.3) angehört.

9. Kommunikationsnetz nach Anspruch 8, **dadurch gekennzeichnet, dass** in jeder Gruppe der untersten Netzebene (L1) mindestens eine zusätzliche Datenbank (RSA1, ..., RSC) vorhanden ist.

## Revendications

1. Réseau de communication pour échanger des paquets de données (P) de connexions ATM, lequel est construit de manière hiérarchique de sorte que, dans un niveau de réseau le plus bas (L1), soit disposée une pluralité de noeuds de réseau (A.1.1, .., C.2) et que chaque noeud soit directement ou indirectement connecté par au moins un chemin physique possible d'un côté à des dispositifs terminaux et de l'autre côté à chaque autre noeud de réseau de ce niveau de réseau, de sorte que dans des niveaux de réseau supérieurs (L2, L3) soient disposés des noeuds de réseau (A.1, ..., A.4, ..., B.2; A, B, C) qui sont chacun responsables administrativement d'un groupe (PGA1, ..., PGA4, ..., PGB2; PGA, PGB, PGC) de noeuds de réseau situés dans un niveau de réseau sous-jacent, et de sorte que chaque noeud de réseau (par exemple A.1) situé dans un niveau de réseau supérieur soit physiquement connecté à au moins un noeud de réseau (A.1.1) du groupe dont il est responsable et soit logiquement connecté à chaque autre noeud de réseau (A.1.2, A.1.3) de ce groupe (PGA1) et à chaque autre noeud de réseau (A.2, A.3, A.4) du groupe auquel il appartient lui-même, dans lequel réseau de communication chaque noeud de réseau (par exemple A.1) d'un niveau de réseau supérieur est responsable d'assurer que chaque noeud de réseau (A.1.1, A.1.2, A.1.3) d'un niveau de réseau inférieur, dont il est responsable, puisse, si nécessaire, utiliser les données de connexion dont il a besoin pour déterminer l'information sur le chemin pour les paquets de données d'une connexion ATM concrète dans ce réseau de communication, et dans lequel réseau de communication une banque de données (DB), dans laquelle sont gardées disponibles des données de connexion, est disposée dans des noeuds de réseau d'un niveau de réseau inférieur, **caractérisé en ce que** chaque banque de données dans un noeud de réseau d'un niveau de réseau inférieur (L1) garde disponibles des données de connexion pour un environnement rapproché (PGA1, ..., PGA4, ..., PGC), **en ce qu'**au moins une banque de données supplémentaire (RSA1, ..., RSC), qui garde disponibles des données de connexion pour un environnement plus étendu, est fournie et affectée à un noeud de réseau, et **en ce qu'**un noeud de réseau d'un niveau de réseau supérieur (par exemple A.1) qui est responsable d'un noeud de réseau (A.1.1) auquel est assignée une banque de données supplémentaire (RSA1), comprend des moyens (Contr, RA) pour maintenir les données de connexion dans cette banque de données supplémentaire.

2. Procédé pour rendre disponibles des données de connexion afin de déterminer une information sur le chemin (PI) pour les paquets de données (P) des connexions ATM dans un réseau de communication qui est construit de manière hiérarchique de sorte que dans un niveau de réseau le plus bas (L1) une pluralité de noeuds de réseau (A.1.1, ..., C.2) soit fournie et que chaque noeud soit directement ou indirectement connecté par au moins un chemin physique possible d'un côté à des dispositifs terminaux et de l'autre côté à chaque autre noeud de réseau de ce niveau de réseau, de sorte que dans des niveaux de réseau supérieurs (L2, L3) soient fournis des noeuds de réseau (A.1., ..., A.4, .... B.2; A, B, C) qui sont chacun administrativement responsables d'un groupe (PGA1, ..., PGA4, ..., PGB2, PGA, PCB, PGC) de noeuds de réseau situés dans un niveau de réseau sous-jacent, et en sorte que chaque noeud de réseau (par exemple A.1) situé dans un niveau de réseau supérieur soit physiquement connecté à au moins un noeud de réseau (A.1.1) du groupe dont il est responsable et qu'il soit logiquement connecté à chaque autre noeud de réseau (A.1.2, A.1.3) de ce groupe (PGA1) et à chaque autre noeud de réseau (A.2, A.3, A.4) du groupe (PGA) auquel il appartient lui-même, dans lequel procédé chaque noeud de réseau (par exemple A.1) d'un niveau de réseau supérieur est responsable d'assurer que chaque noeud de réseau (A.1.1, A.1.2, A.1.3) d'un niveau de réseau inférieur, dont il est responsable, puisse, si nécessaire, utiliser les données de connexion dont il a besoin pour déterminer l'information sur le chemin (PI) pour les paquets de données (P) d'une connexion ATM concrète dans ce réseau de communication, et dans lequel procédé, dans des noeuds de réseau d'un niveau de réseau inférieur, des données de connexion sont gardées disponibles dans une banque de données (DB), **caractérisé en ce que** chaque banque de données (DB) dans un noeud de réseau d'un niveau de réseau inférieur garde disponibles des données de connexion pour un environnement rapproché, **en ce qu'**au moins une banque de données supplémentaire (RSA1, ..., RSC), qui garde disponibles des données de connexion pour un environnement plus étendu, est accessible par un noeud de réseau et affectée à ce noeud de réseau, et **en ce que** le noeud de réseau d'un niveau de réseau supérieur (A.1) qui est responsable d'un noeud de réseau (A.1.1) auquel est affectée une banque de données supplémentaire (RSA1), est également responsable de la maintenance des données de connexion dans cette banque de données supplémentaire.

3. Procédé pour déterminer l'information sur le chemin (PT) pour des paquets de données (P) de connexions ATM dans un noeud de réseau (par exemple A.1.2) d'un réseau de communication qui est construit de manière hiérarchique de sorte que, dans un niveau de réseau le plus bas (L1), une pluralité de noeuds de réseau (A.1.1, ..., C.2) soit fournie et que chaque noeud soit directement ou indirectement connecté par au moins un chemin physique possible d'un côté à des dispositifs terminaux et de l'autre côté à chaque autre noeud de réseau de ce niveau de réseau, de sorte que, dans des niveaux de réseau supérieurs (L2, L3), soient fournis des noeuds de réseau (A.1, ..., A.4, .., B.2; A, B, C) qui sont chacun administrativement responsables d'un groupe (PGA1, ..., PGA4, ...., PGB2, PGA, PGB, PGC) de noeuds de réseau situés dans un niveau de réseau sous-jacent, et de sorte que chaque noeud de réseau (par exemple A.1) situé dans un niveau de réseau supérieur soit physiquement connecté à au moins un noeud de réseau (A.1.1) du groupe dont il est responsable et qu'il soit logiquement connecté à chaque autre noeud de réseau (A. 1.2, A.1.3) de ce groupe (PGA1) et à chaque autre noeud de réseau (A.2, A.3, A.4) du groupe (PGA) auquel il appartient lui-même, dans lequel procédé depuis ce noeud de réseau appartenant à un niveau de réseau inférieur sont appelées des données de connexion dans une banque de données (DB) affectée au noeud de réseau, **caractérisé en ce que** les données de connexion qui ne peuvent pas être appelées dans la banque de données (DB) affectée au noeud de réseau (A.1.2) sont appelées dans une banque de données supplémentaire (RSA1) qui est affectée à un autre noeud de réseau (A.1.1).

4. Noeud de réseau (A.1.2, ..., C.2) pour un niveau de réseau inférieur (L1) d'un réseau de communication qui est construit de manière hiérarchique de sorte que dans un niveau de réseau le plus bas (L1) soit fournie une pluralité de noeuds de réseau (A.1.1, ..., C.2) et que chaque noeud de réseau soit directement ou indirectement connecté par au moins un chemin physique possible, d'un côté à des dispositifs terminaux et de l'autre côté à chaque autre noeud de réseau de ce niveau de réseau, de sorte que dans des niveaux de réseau supérieurs (L2, L3) soient fournis des noeuds de réseau (A.1, ..., A.4, ..., B.2; A, B, C) qui sont chacun administrativement responsables d'un groupe (PGA1, ..., PGA4, ..., PGB2, PGA, PGB, PGC) de noeuds de réseau situés dans un niveau de réseau sous-jacent, et de sorte que chaque noeud de réseau (par exemple A.1) situé dans un niveau de réseau supérieur soit physiquement connecté à au moins un noeud de réseau (A.1.1) du groupe dont il est responsable et qu'il soit logiquement connecté à chaque autre noeud de réseau (A.1.2, A.1.3) de ce groupe (PGA1) et à chaque autre noeud de réseau (A.2, A.3, A.4) du groupe (PGA) auquel il appartient lui-même, dans lequel noeud de réseau est fournie une banque de données (DB) dans laquelle sont gardées disponibles des données de connexion, **caractérisé en ce que** la banque de données (DB) garde disponibles des données de connexion pour un environnement rapproché et **en ce que** le noeud de réseau comprend des moyens d'interrogation (RA) par le biais desquels les données de connexion pour un environnement plus étendu peuvent être appelées dans une banque de données supplémentaire (RSA1, ..., RSC) qui est affectée à un autre noeud de réseau.

5. Noeud de réseau (A.1.1, ..., C.1) pour un niveau de réseau inférieur (L1) d'un réseau de communication qui est construit de manière hiérarchique de sorte que dans un niveau de réseau le plus bas (L1) soit fournie une pluralité de noeuds de réseau (A.1.1, ..., C.2) et de sorte que chaque noeud de réseau soit directement ou indirectement connecté par au moins un chemin physique possible, d'un côté à des dispositifs terminaux et de l'autre côté à chaque autre noeud de réseau de ce niveau de réseau, de sorte que dans des niveaux de réseau supérieurs (L2, L3) soient fournis des noeuds de réseau (A.1, ..., A.4, ..., B.2; A, B, C) qui sont chacun administrativement responsables d'un groupe (PGA1, ..., PGA4, ..., PGB2, PGA, PGB, PGC) de noeuds de réseau situés dans un niveau de réseau sous-jacent, et de sorte que chaque noeud de réseau (par exemple A.1) situé dans un niveau de réseau supérieur soit physiquement connecté à au moins un noeud de réseau (A.1.1) du groupe dont il est responsable et qu'il soit logiquement connecté à chaque autre noeud de réseau (A1.2, A1.3) de ce groupe (PGA1) et à chaque autre noeud de réseau (A.2, A.3, A.4) du groupe (PGA) auquel il appartient lui-même, dans lequel noeud de réseau est fournie une banque de données (DB) dans laquelle sont gardées disponibles des données de connexion, **caractérisé en ce qu'**une banque de données supplémentaire (RSA1, ..., RSC), qui garde disponibles des données de connexion pour un environnement plus étendu, est fournie et est affectée à ce noeud de réseau ou connectée à la banque de données (DB) fournie dans ce noeud de réseau, et **en ce que** le noeud de réseau comprend des moyens (RA) par le biais desquels des données de connexion provenant de la banque de données supplémentaire puissent être transmises sur demande à d'autres noeuds de réseau.

6. Noeud de réseau (A.1, ..., B.2; A, B, C) pour un niveau de réseau supérieur (L2, L3) d'un réseau de communication qui est construit de manière hiérarchique de sorte que dans un niveau de réseau le plus bas (L1) soit fournie une pluralité de noeuds de réseau (A.1.1, ..., C.2) et de sorte que chaque noeud de réseau soit directement ou indirectement connecté par au moins un chemin physique possible, d'un côté à des dispositifs terminaux et de l'autre côté à chaque autre noeud de réseau de ce niveau de réseau, de sorte que dans des niveaux de réseau supérieurs (L2, L3) soient fournis des noeuds de réseau (A.1, ..., A.4, ..., B.2; A, B, C) qui sont chacun administrativement responsables d'un groupe (PGA1, ..., PGA4, ..., PGB2, PGA, PGB, PGC) de noeuds de réseau situés dans un niveau de réseau sous-jacent, et de sorte que chaque noeud de réseau (par exemple A.1) situé dans un niveau de réseau supérieur soit physiquement connecté à au moins un noeud de réseau (A.1.1) du groupe dont il est responsable et qu'il soit logiquement connecté à chaque autre noeud de réseau (A.1.2, A.1.3) de ce groupe (PGA1) et à chaque autre noeud de réseau (A.2, A.3, A.4) du groupe (PGA) auquel il appartient lui-même, **caractérisé en ce que** le noeud de réseau comprend des moyens (Contr, RA) pour prendre en charge l'échange des données de connexion entre des banques de données (DB) dans des noeuds de réseau dont ce noeud de réseau est responsable et des banques de données (DB) dans d'autres noeuds de réseau pour effectuer la maintenance des données correspondantes stockées.

7. Réseau de communication selon la revendication 1, **caractérisé en ce que** le niveau de réseau inférieur, dont les noeuds de réseau disposent chacun d'une banque de données dans laquelle sont gardées disponibles des données de connexion pour un environnement rapproché, est le niveau de réseau le plus bas (L1).

8. Réseau de communication selon la revendication 7, **caractérisé en ce que** l'environnement rapproché est la région de ce groupe (par exemple PGA1) auquel appartient le noeud de réseau correspondant (A.1.1, ..., A.1.3).

9. Réseau de communication selon la revendication 8, **caractérisé en ce qu'**au moins une banque de données supplémentaire (RSA1, ..., RSC) est fournie dans chaque groupe du niveau de réseau le plus bas (L1).
